# EUROPEAN PATENT SPECIFICATION

(11) **EP 4 266 865 B1**
(45) Date of publication and mention of the grant of the patent: **18.12.2024**
(21) Application number: 21830776.7
(22) Date of filing: 03.12.2021
(51) Int. Cl.: A01C 23/00, A01C 23/02

(54) **DEVICE FOR DISPENSING FLUID PRODUCTS**
VORRICHTUNG ZUR AUSGABE VON FLÜSSIGEN PRODUKTEN
DISPOSITIF DE DISTRIBUTION DE PRODUITS FLUIDES

(30) Priority: 28.12.2020 IT 202000032536
(43) Date of publication of application: 01.11.2023
(73) Proprietor: Startec S.r.l., 33079 Sesto al Reghena (PN) (IT)
(72) Inventor: SUT, Livio, 33078 San Vito al Tagliamento (PN) (IT)
(74) Representative: Piovesana, Paolo
(86) International application number: PCT/IB2021/061296
(87) International publication number: WO 2022/144634

(56) References cited:
- WO-A1-2020/165822
- WO-A1-2020/165822
- IT-A1- UB20 151 991
- US-A- 4 733 685
- US-A- 5 054 690
- US-A1- 2004 074 997

## Description

The present invention relates to a device for dispensing fluid products, in particular for herbicide treatments, fungicides, insecticides, fertilizers, fertilizers, pesticides and the like. The following documents are related prior art: IT UB20 151 991 A1, WO 2020/165822 A.

In the agricultural sector, devices are known to be combined with agricultural machines, such as for example seeders, transplanters, weeders and machines and equipment in general for the localized distribution of fluid products, according to programmed quantities. For this purpose, the agricultural machine is equipped with one or more tanks containing the fluid products to be distributed and with one or more dispensing units having a supply duct, which leads to a distribution chamber to feed it with the fluid to be dispensed, and a plurality of delivery ducts terminating with nozzles installed in the machine near the ground to deliver the treatment fluid in a localized manner.

The Italian patent n. 102015000031816 describes a dispensing device for liquid products, in which each dispensing unit comprises a box-shaped body which defines an inspectable cylindrical distribution chamber, to which a central supply duct for the liquid to be dispensed and a plurality of ducts arranged around the central duct for dispensing the liquid itself to as many nozzles.

In order to avoid dripping of the liquid present in the cylindrical chamber and in the pipes when the flow of new liquid into the latter is interrupted, each delivery duct is provided at its end, which leads to the distribution chamber, of a small valve which is constituted by an elastic membrane presenting a cut with flaps that can be spread apart due to the effect of the pressure, with which the liquid to be distributed is introduced into the chamber itself, and automatically reachable when the liquid ceases to be introduced into it.

This known solution has solved a series of problems that the prior art presented but at the same time revealed a plurality of limitations that the present invention aims to overcome.

One of these limits consists in a certain manufacturing complexity of the device, which is provided with a valve for each of the delivery ducts, which can be even a few dozen per delivery unit.

Another limitation consists in the fact that the opening of each valve is caused by the pressure, with which the liquid to be dispensed is fed to the distribution chamber, and inevitably causes a pressure drop of the inlet liquid with respect to the outlet liquid. pressure which is all the more important the lower the working pressure is.

Another limitation consists in the fact that since the opening of each valve is determined by the elastic yielding of the membrane, with which the valve is made, an identical behaviour is not ensured for all the valves and therefore their identical opening at the same pressure of the adducted liquid. It follows that a uniform distribution of liquid on all delivery ducts is not ensured.

Another drawback consists in the fact that the valves are of delicate operation, they are sensitive to dirt and inevitable encrustations due to the liquid to be dispensed and require periodic maintenance which is all the more laborious the higher the number of valves present in the dispensing unit is.

The object of the invention is to eliminate all the drawbacks which jointly or separately are recognizable in the state of the art.

In particular, the object of the invention is to propose a device which is capable of delivering fluids through a plurality of ducts with a substantial uniformity of delivery through all these ducts.

Another object of the invention is to propose a device for dispensing fluids which is simple to manufacture and safe and reliable in operation.

Another object of the invention is to propose a device for dispensing fluids which allows to precisely regulate the opening and closing pressure of the dispensing through each duct.

Another object of the invention is to propose a device for dispensing fluids which excludes any risk of dripping during transfer over rough terrain.

Another object of the invention is to propose a device for dispensing fluids which ensures constant regular operation while requiring limited maintenance.

All these objects and others that will result from the following description are achieved according to the invention with a device for dispensing fluid products, as defined in claim 1.

The present invention is further clarified hereinafter in some of its preferred forms of practice. embodiments reported for purely illustrative and non-limiting purposes with reference to the attached drawings in which:

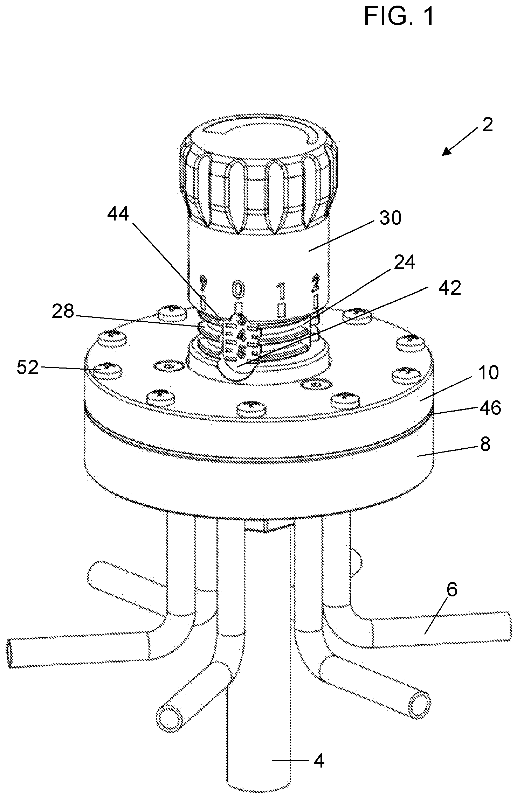

- Figure 1: shows a perspective view of a device for dispensing fluid products according to the invention,

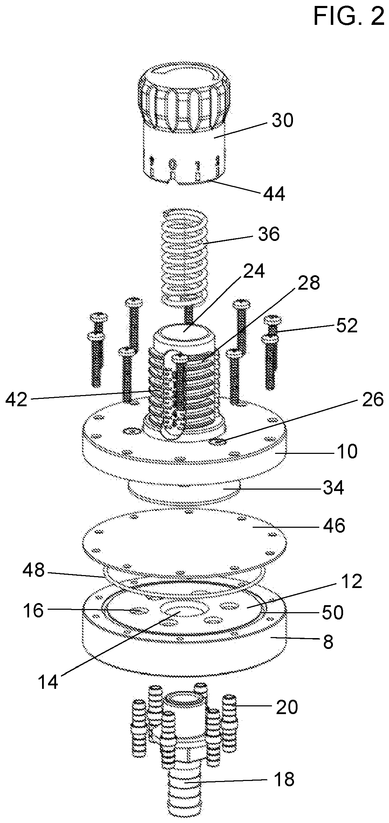

- Figure 2: shows it in an exploded perspective view,

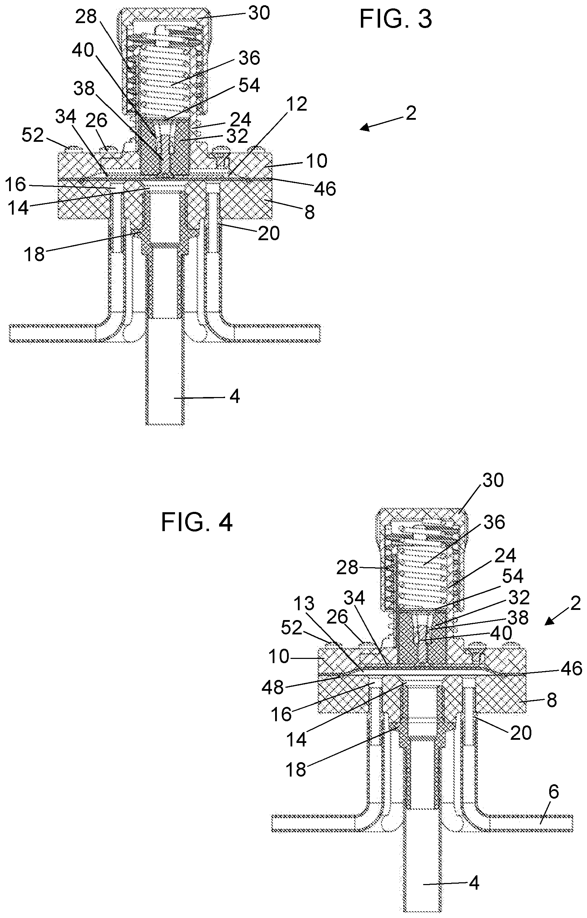

- Figure 3: shows it in diametrical section in inactive condition, and
- Figure 4: shows it in diametrical section in dispensing condition.

As can be seen from the figures, the device according to the invention is globally indicated with 2 and is intended to be installed alone or with similar devices in an agricultural machine, such as in particular a seeder, a transplanter, a weeder or any other machine, with which the fluid and in particular the liquid to be dispensed can be distributed in the soil or on the plants in a localized manner and according to the programmed dose.

For this purpose the device 2 is provided with a supply duct 4, through which the fluid to be dispensed, contained in a tank supported by the frame of the agricultural machine and not shown, is transferred to the device 2, and with a plurality of dispensing ducts 6, through which the same fluid is brought to as many nozzles installed in the agricultural machine in suitable positions to be distributed in a localized form in the ground.

Moreover, since all this is well known to operators in the sector, it does not require a more detailed description.

The device 2 according to the invention comprises a cylindrical base 8 and a cover 10, also cylindrical, which can be coupled together to define an expansion chamber 12, better described below.

Inside the expansion chamber 12, when the circuit is open, a distribution chamber 13 is formed, as better described below, between the upper surface of the base 8 and the lower surface of a membrane 46.

The base 8 presents a central through hole 14 and a plurality of through holes 16 of smaller diameter arranged around said central hole 14, preferably on one or more concentric circumferences.

A connection 18 for the supply duct 4 can be inserted in the central hole 14.

Preferably, a pump (not shown) is interposed between the reservoir of the fluid to be delivered and the device 2 in the duct 4, which has the function of supplying the fluid to the device 2 with a predetermined and possibly adjustable pressure.

The constraint between the connection 18 and the base 8 can be any and is linked to the nature of the material with which the base 8 is made. For example, if the base 8 is made of metal, it is preferable that the hole 14 has a threaded internal surface and the connection 18 has the portion to be inserted into the hole 14 which is also threaded, while if the base 8 is made of plastic material, it is preferable that the connection portion 18 to be inserted into the hole 14 presents a plurality of parallel circumferential ribs with a sawtooth profile, to be inserted by forcing into the hole itself.

In the holes 16 obtained in the base 8, connections 20 can be inserted for the same number of delivery ducts 6. The constraint between each connection 20 and the base 8 is also linked to the nature of the material, with which the base is made and can be similar to that of the connection 18, that is, for example, for threaded coupling or for forced insertion. The distribution chamber 13 has a diameter such as to have its circumferential edge external to all the through holes 16 obtained in the base 8.

The cover 10 extends from the opposite side with respect to the base 8 in a cylindrical sleeve 24, which can be made in the body single with the cover 10 or it can be made in a separate piece, joined to the cover 10 by means of screws 26, as shown in the drawings.

The sleeve 24 externally presents a thread 28, to which a knob 30 can be screwed, and is internally affected by a cylindrical cavity, in which a spacer 32 is preferably housed, which at the inner end is constrained to a plate 34, housed inside the expansion chamber 12, and at the external end it rests on a helical spring 36, interposed between the spacer 32 itself and the bottom of the knob 30.

The connection between the plate 34 and the spacer 32 is preferably obtained by means of a screw 38 and a nut 40, or by means of a screw 38 engaging directly in a threaded portion formed in the spacer itself.

A graduated scale 42 is provided on the outer side wall of the sleeve 24, showing indications corresponding to the pitch of the thread 28, in order to establish a correlation between the degree of screwing of the knob 30 on the sleeve 24 and the indication highlighted by the edge of the knob itself on the graduated scale 42.

Furthermore, in the circular edge of the knob 30 there are notches which divide the edge itself into equal portions, for example ten, so as to indicate on an index of the scale 42 the fraction of a turn of the knob itself.

In this way, the scale 42 bearing on the sleeve 24 and the scale on the edge 44 of the knob 30 allow to define in an objective manner the size of the screwing of the same knob on the sleeve 24 and consequently the degree of preload of the spring 36.

Between the base 8 and the cover 10 the discoidal membrane 46 is interposed having an extension substantially identical to that of the base 8 and of the cover 10. It is kept adherent to the upper surface of the base 8, and therefore in a position to close both the hole 14 and the holes 16, by the plate 34 pushed by the spring 36 through the spacer 32. It is also provided that the membrane 46 and the plate 34 can be made in a single body, which in the central part is substantially rigid while in the annular peripheral part it is elastically yielding.

In any case, it is preferable that a toroidal gasket 48 is interposed between the elastic membrane 46 and the base 8, which is partially housed within a circumferential groove 50 obtained in the base 8 and ensures the seal of the distribution chamber 13 when the cover 10 is fixed to this by means of screws 52.

The operation of the dispensing device according to the invention is as follows: in the absence of flow of fluid from the pump into the tube 4, the spring 36 presses, through the plate 34, the membrane 46 against the upper surface of the base 8, and keeps all the holes 16 closed, preventing the leakage and dripping of the fluid present in the circuit from the pipes 6.

In the presence of fluid flow from the pump into the pipe 4, the force exerted by the fluid on the membrane 46 causes the spring to compress 36 and lift both the membrane 46 and the plate 34, creating the distribution chamber 13 which connects, in an open circuit, the tube 4 with the tubes 6. The amount of fluid that flows depends on the pressure created by the pump in the tube 4 or on any nozzles with a calibrated hole inserted in the circuit of the tubes 6 or on another known regulation method.

When the flow of fluid from the pump into the pipe 4 is interrupted, the pressure previously present in the distribution chamber 13 decreases; in this way the thrust exerted by the spring 36 on the plate 34 and, consequently, on the membrane 46, prevails and brings the membrane itself into contact with the upper surface of the base 8, pressing it against this and causing the simultaneous closure of all the holes 16.

It should be noted that the pressure which causes the detachment of the membrane 46 from the upper surface of the base 8 is defined by the force which is necessary to compress the spring 36 and which is adjustable by the operator by screwing / unscrewing the knob 30 and consequent variation of the preload spring 36. This pressure is determined according to various variables such as in particular the width of the operating front of the machine, the working conditions, transport and use of the same, the flow rate of the fluid to be distributed, its viscosity or other characteristics, the number of ducts 6, etc.

Moreover, it is also provided that as an alternative to the manual actuation of the knob 30, this can be operated with an electric, pneumatic, hydraulic or similar mechanism, in itself known, which can be controlled automatically or manually by the operator sitting in his seat. guide.

In order then to obtain a correct correspondence between the position of the index of the knob 30 and the pressure value of the fluid to cause the delivery and the cessation of the delivery of the fluid, that is to say in order to regulate the extent of the pre-charge of the spring 36, further adjustment spacers 54 can be interposed between the spring itself and the spacer 32 or between the spring itself and the plate 34.

The connections 20 can have the hole with a size such as to allow a copious flow of the fluid to be distributed on each delivery duct 6, but they can also have a calibrated hole to accurately determine the quantity of fluid to be distributed on each delivery duct 6. Alternatively, instead of the connections 20, the holes 16 obtained in the base 8 can be calibrated. The operation of the device according to the invention is not affected by the presence or absence of calibrated holes 16 or calibrated connections 20.

It is clear that the dispensing device according to the invention is much more advantageous than traditional devices and in particular:
- it ensures uniform delivery of the fluid through the various ducts 6;
- allows to precisely and repeatably adjust the pressure at which the circuit opens and closes by spacing the membrane 46 from the upper surface of the base 8,
- thanks to the elimination of the individual valves of each duct, it is possible to simpler and safer to operate and also eliminates all the maintenance interventions that in the past were required by the valves,
- eliminates any risk of dripping during the general transfer of the agricultural machine and the transfer in particular for rough terrain.

In a different embodiment, the device according to the invention has no spacer and has the spring 36 which presses directly on the plate 34. In this case, however, it is advisable for the plate 34 to remain centered in the expansion chamber 12 and therefore with respect to the spring 36, and this can for example be obtained by making a centering relief of the latter on the surface of the plate facing the spring.

In another embodiment, if the preloading conditions of the spring (i.e. of the opening pressure of the circuit) are known and constant, it is possible to simplify the device by making the blind sleeve 24 at the upper end and with a depth defined in in such a way as to obtain the desired preload of the spring 36, which in this case is fixed and does not require the knob 30. If, however, variations in the preload of the spring 36 are required, these can be obtained in a fixed way, that is not adjustable, by inserting or removing adjustment spacers 54.

It is also provided that in order to make the closing action exerted by the membrane 46 on the holes 16 more effective, the membrane itself is made with its surface facing towards said holes affected by protuberances of various shapes (conical, truncated cone, hemispherical or similar) positioned in correspondence with these in order to close them more effectively.

In a still different embodiment, the supply duct 4 does not lead to the base 8 of the device but to the cover 10 and more specifically crosses the bottom of the knob 30 or of the blind sleeve 24 and abuts the membrane 46.

## Claims

1. Device for dispensing fluid products, comprising a dispensing unit (2), to which a first duct (4) for the supply of said fluid to be dispensed leads, said dispensing unit (2) comprising a base (8), which includes a plurality of second ducts (6) for dispensing said fluid, and a cover (10), which defines with said base an expansion chamber (12) and a distribution chamber (13), in the which also opens said first duct (4) for the adduction of said fluid, the device further comprising:
- an elastic membrane (46) interposed between said base (8) and said cover (10) and having a first surface and a second surface , the latter facing all the outlet openings (16) of said second ducts (6) in said distribution chamber (13), **characterized in that** the device further comprises:
- a plate (34) arranged within said expansion chamber (12) and adhering to said first surface of said membrane (46), and
- elastic means (36) as associated with said plate (34) and configured to keep said membrane (46) elastically pressed against said openings (16) of said second ducts (6).

2. Device according to claim 1 **characterized in that** said first conduit (4) also leads to said base (8).

3. Device according to claim 1 **characterized in that** said elastic means consist of a helical spring (36) acting on the surface of said plate (34) opposite the contact surface of said plate with said membrane (46).

4. Device according to one or more of the preceding claims **characterized in that** said cover (10) extends into a cylindrical blind sleeve (24) delimiting a housing compartment of said preloaded helical spring (36) interposed between the bottom of said blind sleeve (24) and said plate (34).

5. Device according to one or more of the preceding claims **characterized in that** said cover (10) is provided with an externally threaded cylindrical sleeve (24), to which a knob (30) for delimiting a housing space for the preloaded helical spring (36) can be screwed interposed between the bottom of said knob (30) and said plate (34).

6. Device according to one or more of the preceding claims, **characterized in that** at least one spacer element (32,54) is interposed between said spring (36) and said plate (34).

7. Device according to one or more of the preceding claims, **characterized in that** a graduated scale (42) cooperates with the edge (44) of said knob (30) to indicate the degree of prestress of said spring (36) or the quantity of fluid to be dispensed.

8. Device according to claim 6 **characterized in that** in the edge (44) of said knob (30) there is a graduated scale indicating the fraction of turn of rotation of the knob itself with respect to said threaded sleeve (24).

9. Device according to one or more of the preceding claims **characterized in that** said plate (34) is incorporated in said membrane (46).

10. Device according to one or more of the preceding claims **characterized in that** the surface of said membrane facing the openings (16) of said second ducts (6) presents protrusions positioned at said openings (16).

11. Device according to one or more of the preceding claims **characterized in that** said openings (16) are calibrated.

12. Device according to one or more of the preceding claims **characterized in that** said second ducts (6) are connected to said base (8) by means of fittings (20) presenting a calibrated hole.

13. Device according to one or more of the preceding claims **characterized in that** electric, pneumatic or hydraulic actuation means are associated with said knob (30).

## Patentansprüche

1. Vorrichtung zum Abgeben von flüssigen Produkten, umfassend eine Abgabeeinheit (2), zu der eine erste Leitung (4) zum Zuführen der abzugebenden Flüssigkeit führt, wobei die Abgabeeinheit (2) eine Basis (8), die eine Vielzahl von zweiten Leitungen (6) zum Abgeben der Flüssigkeit umfasst, und eine Abdeckung (10) umfasst, die mit der Basis eine Erweiterungskammer (12) und eine Verteilungskammer (13) definiert, in die auch die erste Leitung (4) zum Zuführen der Flüssigkeit mündet, wobei die Vorrichtung außerdem umfasst:
- eine elastische Membran (46), die zwischen der Basis (8) und der Abdeckung (10) angeordnet ist und aufweisend eine erste Oberfläche und eine zweite Oberfläche, wobei die letztere allen Auslassöffnungen (16) der zweiten Leitungen (6) in der Verteilungskammer (13) zugewandt ist, **dadurch gekennzeichnet, dass** die Vorrichtung ferner umfasst:
- eine Platte (34), die innerhalb der Erweiterungskammer (12) angeordnet ist und die an der ersten Oberfläche der Membran (46) anhaftet, und
- elastische Mittel (36), die der Platte (34) zugeordnet sind und die konfiguriert sind, die Membran (46) elastisch gegen die Öffnungen (16) der zweiten Leitungen (6) gedrückt zu halten.

2. Vorrichtung nach Anspruch 1, **dadurch gekennzeichnet, dass** die erste Leitung (4) auch zu der Basis (8) führt.

3. Vorrichtung nach Anspruch 1, **dadurch gekennzeichnet, dass** die elastischen Mittel aus einer Schraubenfeder (36) bestehen, die auf die Oberfläche der Platte (34) gegenüber der Kontaktfläche der Platte mit der Membran (46) wirkt.

4. Vorrichtung nach einem oder mehreren der vorhergehenden Ansprüche, **dadurch gekennzeichnet, dass** sich die Abdeckung (10) in eine zylindrische Blindhülse (24) erstreckt, die einen Aufnahmeraum für die vorgespannte Schraubenfeder (36) begrenzt, die zwischen dem Boden der Blindhülse (24) und der Platte (34) angeordnet ist.

5. Vorrichtung nach einem oder mehreren der vorhergehenden Ansprüche, **dadurch gekennzeichnet, dass** die Abdeckung (10) mit einer zylindrischen Hülse (24) mit Außengewinde versehen ist, auf die ein Knopf (30) zur Begrenzung eines Aufnahmeraums für die vorgespannte Schraubenfeder (36) aufgeschraubt werden kann, die zwischen dem Boden des Knopfes (30) und der Platte (34) angeordnet ist.

6. Vorrichtung nach einem oder mehreren der vorhergehenden Ansprüche, **dadurch gekennzeichnet, dass** mindestens ein Abstandselement (32, 54) zwischen der Feder (36) und der Platte (34) angeordnet ist.

7. Vorrichtung nach einem oder mehreren der vorhergehenden Ansprüche, **dadurch gekennzeichnet, dass** eine Skala (42) mit dem Rand (44) des Knopfes (30) zusammenwirkt, um das Niveau der Vorspannung der Feder (36) oder die Menge der abzugebenden Flüssigkeit anzuzeigen.

8. Vorrichtung nach Anspruch 6, **dadurch gekennzeichnet, dass** in dem Rand (44) des Knopfes (30) eine Skala vorhanden ist, die den Anteil der Drehrichtung des Knopfes selbst in Bezug auf die Gewindehülse (24) anzeigt.

9. Vorrichtung nach einem oder mehreren der vorhergehenden Ansprüche, **dadurch gekennzeichnet, dass** die Platte (34) in die Membran (46) eingebaut ist.

10. Vorrichtung nach einem oder mehreren der vorhergehenden Ansprüche, **dadurch gekennzeichnet, dass** die den Öffnungen (16) der zweiten Leitungen (6) zugewandte Oberfläche der Membran an den Öffnungen (16) positionierte Vorsprünge aufweist.

11. Vorrichtung nach einem oder mehreren der vorhergehenden Ansprüche, **dadurch gekennzeichnet, dass** die Öffnungen (16) kalibriert sind.

12. Vorrichtung nach einem oder mehreren der vorhergehenden Ansprüche, **dadurch gekennzeichnet, dass** die zweiten Leitungen (6) mit der Basis (8) mittels Anschlussstücke (20) verbunden sind, die ein kalibriertes Loch aufweisen.

13. Vorrichtung nach einem oder mehreren der vorhergehenden Ansprüche, **dadurch gekennzeichnet, dass** dem Knopf (30) elektrische, pneumatische oder hydraulische Betätigungsmittel zugeordnet sind.

## Revendications

1. Dispositif de distribution de produits fluides, comprenant une unité de distribution (2), à laquelle conduit un premier conduit (4) pour l'alimentation dudit fluide à distribuer, ladite unité de distribution (2) comprenant une base (8), qui comprend une pluralité de seconds conduits (6) pour la distribution dudit fluide, et un couvercle (10), qui définit avec ladite base une chambre d'expansion (12) et une chambre de distribution (13), dans laquelle s'ouvre également ledit premier conduit (4) pour l'adduction dudit fluide, le dispositif comprenant en outre :
- une membrane élastique (46) interposée entre ladite base (8) et ledit couvercle (10) et présentant une première surface et une seconde surface, cette dernière faisant face à toutes les ouvertures de sortie (16) desdits seconds conduits (6) dans ladite chambre de distribution (13), **caractérisé en ce que** le dispositif comprend en outre :
- une plaque (34) disposée à l'intérieur de ladite chambre d'expansion (12) et adhérant à ladite première surface de ladite membrane (46), et
- des moyens élastiques (36) associés à ladite plaque (34) et configurés pour maintenir ladite membrane (46) pressée élastiquement contre lesdites ouvertures (16) desdits seconds conduits (6).

2. Dispositif selon la revendication 1 **caractérisé en ce que** ledit premier conduit (4) conduit également à ladite base (8).

3. Dispositif selon la revendication 1 **caractérisé en ce que** lesdits moyens élastiques consistent en un ressort hélicoïdal (36) agissant sur la surface de ladite plaque (34) opposée à la surface de contact de ladite plaque avec ladite membrane (46).

4. Dispositif selon l'une ou plusieurs des revendications précédentes **caractérisé en ce que** ledit couvercle (10) s'étend dans un manchon borgne cylindrique (24) délimitant un compartiment de logement dudit ressort hélicoïdal précontraint (36) interposé entre le fond dudit manchon borgne (24) et ladite plaque (34).

5. Dispositif selon l'une ou plusieurs des revendications précédentes **caractérisé en ce que** ledit couvercle (10) est pourvu d'un manchon cylindrique (24) fileté extérieurement, auquel peut être vissé un bouton (30) destiné à délimiter un espace de logement pour le ressort hélicoïdal (36) précontraint, interposé entre le fond dudit bouton (30) et ladite plaque (34).

6. Dispositif selon l'une ou plusieurs des revendications précédentes, **caractérisé en ce qu'**au moins un élément d'espacement (32,54) est interposé entre ledit ressort (36) et ladite plaque (34).

7. Dispositif selon l'une ou plusieurs des revendications précédentes, **caractérisé en ce qu'**une échelle graduée (42) coopère avec le bord (44) dudit bouton (30) pour indiquer le degré de précontrainte dudit ressort (36) ou la quantité de fluide à distribuer.

8. Dispositif selon la revendication 6 **caractérisé en ce que** dans le bord (44) dudit bouton (30) il y a une échelle graduée indiquant la fraction de tour de rotation du bouton lui-même par rapport audit manchon fileté (24).

9. Dispositif selon l'une ou plusieurs des revendications précédentes **caractérisé en ce que** ladite plaque (34) est incorporée dans ladite membrane (46).

10. Dispositif selon l'une ou plusieurs des revendications précédentes **caractérisé en ce que** la surface de ladite membrane en face des ouvertures (16) desdits seconds conduits (6) présente des protubérances positionnées au niveau desdites ouvertures (16).

11. Dispositif selon l'une ou plusieurs des revendications précédentes **caractérisé en ce que** lesdites ouvertures (16) sont calibrées.

12. Dispositif selon l'une ou plusieurs des revendications précédentes **caractérisé en ce que** lesdits seconds conduits (6) sont raccordés à ladite base (8) au moyen de raccords (20) présentant un trou calibré.

13. Dispositif selon l'une ou plusieurs des revendications précédentes **caractérisé en ce que** des moyens d'actionnement électriques, pneumatiques ou hydrauliques sont associés audit bouton (30).
